# EUROPEAN PATENT SPECIFICATION

(11) **EP 1 818 285 B1**
(45) Date of publication and mention of the grant of the patent: **25.04.2012**
(21) Application number: 05811422.4
(22) Date of filing: 01.12.2005
(51) Int. Cl.: B65G 1/137, G06Q 10/00

(54) **AUTOMATIC WAREHOUSE**
AUTOMATISCHES LAGER
ENTREPOT AUTOMATIQUE

(30) Priority: 02.12.2004 JP 2004350200
(43) Date of publication of application: 15.08.2007
(73) Proprietor: MURATA KIKAI KABUSHIKI KAISHA, Kyoto 6018326 (JP)
(72) Inventor: ISHIDA, Masato c/o MURATA SYSTEMS K.K., Minami-ku, Kyoto-shi, Kyoto 6018326 (JP); MITTA, Yoshinori c/o MURATA SYSTEMS K.K., Minami-ku, Kyoto-shi, Kyoto 6018326 (JP)
(74) Representative: Liedl, Christine
(86) International application number: PCT/JP2005/022072
(87) International publication number: WO 2006/059675

(56) References cited:
- EP-A1- 0 645 322
- DE-U1- 9 306 107
- JP-A- 4 173 699
- JP-A- 57 156 906
- JP-A- 63 212 606
- JP-A- 63 212 606
- US-A- 5 006 996
- US-A- 5 472 309
- US-A- 5 582 497

## Description

### Technical Field

The present invention relates to an automated warehouse. In particular, the present invention relates to an automated warehouse with a technique of controlling a transportation apparatus in a warehouse at the time of storing an article in the warehouse.

### Background Art

In an automated warehouse, at the time of storing an article in the warehouse, a carrier such as a bucket, a pallet, or a tray is transferred to a transportation apparatus such as a stacker crane in the warehouse. The transportation apparatus transports the article in accordance with an instruction from a control unit designating a rack address for storing the article. Therefore, each time an article is stored in the warehouse, the control unit needs to communicate with the transportation apparatus. According to the disclosure of Japanese Laid-Open Patent Publication No. 5-81490, an ID tag is attached to a bucket. However, there is no disclosure about the technique of utilizing the ID tag for eliminating the necessity of communication from the control unit for transmitting data of the storage destination.

It is also known from the document JP 63 212 606A an automated warehouse wherein an ID communicator is provided at a conveyor for writing an article name, the quantity, the designation etc. in the ID card of a pallet, and wherein a forklift is provided with an ID card communicator for reading the ID card of the pallet to transport the pallet to the conveyor. The ID of the pallet is displayed and read by an operator steering the forklift. This document further discloses transportation equipment, comprising carriers with RFIDs; a transportation vehicle with an ID reader for reading the position where the carrier is to be transported; and an ID writer for writing the position into the RFID so that the position can be read by the transportation vehicle.

### Summary of the Invention

Departing from this state of the art, it is an object of the present invention is to eliminate the necessity of communication from a control unit to a transportation apparatus for transmitting data of a storage position at the time of storing an article in an automated warehouse.
Secondary object of the present invention is to eliminate the necessity of associating racks and buckets to have one-to-one correspondence for making it easier to manage the automated warehouse.
Further object of the present invention is to make it easier to carry out an inventory check of articles. These objects of the invention are solved with the features of Claim 1.

The present invention relates to an automated warehouse transporting an article set in a carrier between a station and a rack by a transportation apparatus. An ID tag is attached to the carrier, and a rack address is written in the ID tag. The transportation apparatus is provided with a reader for reading the ID tag for transporting the carrier to the rack address read from the ID tag of the carrier. For example, an RFID tag is used as the ID tag. The rack address is an address indicating the storage position in the rack.

An ID writer for writing data in the ID tag is provided at the station, and the rack address of a transportation destination is written in the ID tag of the carrier.

In particular the ID of the article set in the carrier is written in the ID tag by the ID writer at the station.

### Advantages of the Invention

According to the present invention, since the transportation apparatus can determine the rack address of the storage destination from the ID tag of the carrier, at the time of storing an article in the warehouse, communication from the control unit to the transportation apparatus for transmitting the rack address of the storage destination is not required. In particular, since data of the ID tag attached to the carrier itself is used, even in the case of implementing complicated control, the article is not transported to a wrong transportation destination. For example, in the case of storing articles in a plurality of carriers successively, even if the order of carriers is changed at the station, it is possible to store the articles in the carriers at the correct rack addresses.

As an ID writer for writing data in the ID tag is provided at the station, and the rack address of a transportation destination is written in the ID tag of the carrier, the rack address for storing the carrier can be changed. Therefore, the automated warehouse can be operated freely. For example, the rack address of the carrier can be changed in accordance to the next retrieval schedule of the article. Further, if any of the rack address becomes empty after retrieval of a carrier, another carrier can be stored at the vacant rack address.

Further, since data of the article set in the carrier (article in stock) is written in the ID tag by the ID writer at the station, the inventory check can be carried out easily, and the data of the article set in the carrier can be obtained by reading the ID tag of the carrier.

### Brief Description of the Drawings

FIG. 1 is a view showing the layout of an automated warehouse according to an embodiment.
FIG. 2 is a view schematically showing the layout of ID readers at a station and a stacker crane.
FIG. 3 is a diagram showing data structure of ID tags.
FIG. 4 is a diagram showing the layout of the ID readers in the automated warehouse according to the embodiment.
FIG. 5 is a flowchart showing a data processing algorithm at the time of storing an article in the warehouse according to the embodiment.
FIG. 6 is a flowchart showing a data processing algorithm at the time of carrying out an inventory check in the warehouse according to the embodiment.

### Brief Description of the Symbols

| | | | | | |
|---|---|---|---|---|---|
| 2 | Automated warehouse | 4 | Rack | 6 | Stacker crane |
| 7 | Hoisting frame | 8 | Station | 10 | Conveyor |
| 12-16 | ID reader | 20 | Control unit for automated warehouse | | |
| 22 | Article | 24 | Bucket | 26 | ID tag of article |
| 28 | ID tag of bucket | 30 | Terminal | | |

### Embodiment

Hereinafter, an embodiment in the most preferred form for carrying out the present invention will be described.

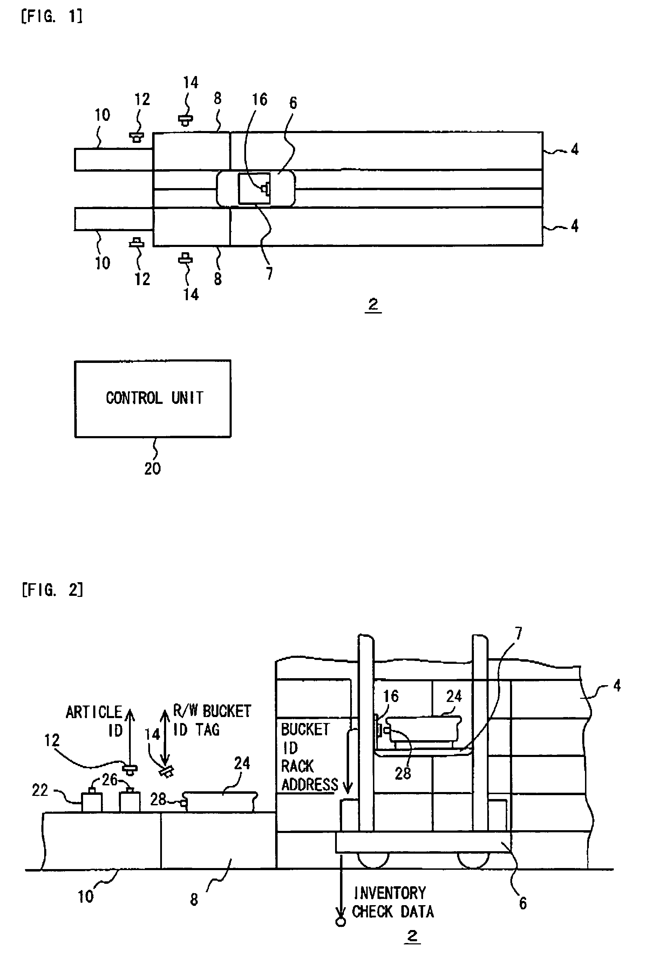

An automated warehouse 2 according to the embodiment will be described with reference to FIGS. 1 to 6. In the drawings, reference numerals 4 denote racks. For example, the racks 4 are provided on both sides of a travel route of a transportation apparatus such as a stacker crane 6 in the warehouse 2. For example, the rack address is designated as (1st row, 2nd group, 3rd stage). A reference numeral 7 denotes an hoisting frame of the stacker crane 6. Reference numerals 8, 8 denote, e.g., a pair of stations. For example, the stations 8 may be designated for storage, for retrieval, or for picking. However, these designations are not essential. In the embodiment, conveyors 10,10 are connected to the stations 8, 8. In a broad sense, the conveyor 10 is regarded as part of the station 8.

ID readers 12 are provided at the conveyors 10 or the stations 8. ID readers 14 are provided at the station 8. The ID reader 14 is an ID reader/writer that can also be used as an ID writer. Further, an ID reader 16 is provided at the hoisting frame 7. The ID readers 12, 14, and 16 are RFID readers, and the ID tags read by the ID readers 12, 14, and 16 are RFID tags. The type of the ID tags is not limited to the RFID tags, and it should be noted that other types of ID tags can be used. A reference numeral 20 denotes a control unit for the automated warehouse 2.

FIG. 2 shows the process regarding the ID tag at the time of storing an article in the warehouse 2, or retrieving an article from the warehouse 2. A reference numeral 22 denotes an article to be stored/retrieved. An ID tag 26 is attached to the article 22. A reference numeral 24 denotes a bucket as an example of a carrier, and an ID tag 28 is attached to the bucket 24. Alternatively, a pallet or a tray with an ID tag may be used as the carrier. The ID reader 12 reads data of the ID tag 26 of an article to be stored/retrieved, and transmits the read data to the control unit 20. The ID reader 14 reads data of the ID tag of the bucket 24, and for example, transmits the ID of the bucket 24, a list of IDs of articles in stock (at the time of retrieval), or the like to the control unit 20. The ID reader 14 receives data of a rack address for storing the bucket 24 from the control unit 20, and writes the data in the ID tag 28. After the stacker crane 6 transfers the bucket 24 to the hoisting frame 7, the stacker crane 6 reads the rack address from the ID tag 28, and transports the bucket 24 to the rack address. Communication between the ID readers 12, 14 and the control unit 20 can be carried out easily utilizing the ground wiring or the like.

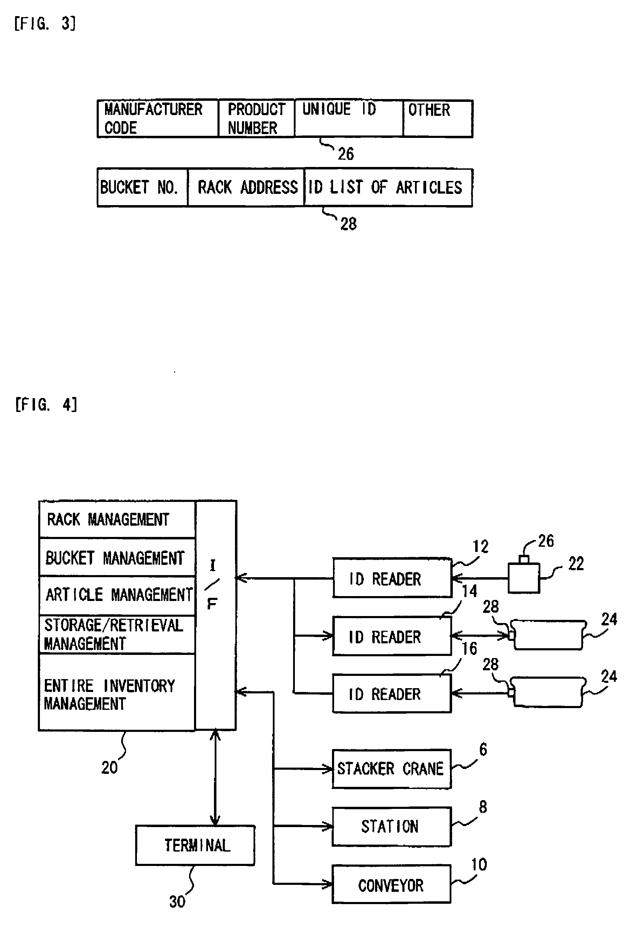

FIG. 3 shows data of the ID tag 26 of the article and data of the ID tag 28 of the bucket. The ID tag 26 of the article stores data about the origin of the article, such as a manufacturer code, and data for identifying the type of the article such as a product number, a product type, a shipment date, a collection date, and a unique ID assigned to each article. Other than the above, the ID tag 26 may store data such as a use-by date, a price, retrieval destination, and remarks. The ID tag 28 of the bucket stores an ID of the bucket as a bucket number, a rack address, and a list of unique IDs of articles 22 placed (set) in the bucket 24. Instead of the list of unique IDs, the ID tag 28 may store a manufacturer code, a product number, the number of products, and a storage date. It should be noted that IDs of the ID tags 26 of the articles and IDs of the ID tag 28 of the buckets should not be overlapped with each other.

FIG. 4 shows the relationship between the control unit 20 and the ID readers 12 to 16. In the specification, it should be noted that the ID reader includes an ID reader/writer. The control unit 20 has a database for performing rack management, bucket management, article management, storage/retrieval management, and the entire inventory management or the like. Further, a suitable interface is provided for carrying out communication with, e.g., the stacker crane 6, the station 8, the conveyor 10, and the terminal 30. In the rack management, information about which rack is vacant, and which rack contains the bucket 24 is stored, e.g., for each rack address. In the bucket management, for each bucket ID, the location (e.g., rack address) of the bucket, and IDs of articles in the bucket are stored. In the article management, manufacturer codes, product codes, unique IDs, and storage date or the like of articles in stock are stored. In the storage/retrieval management, the ID of the article for storage/retrieval read by the ID reader 12 is collated with data of the article for storage/retrieval transmitted from the terminal 30 or the like.

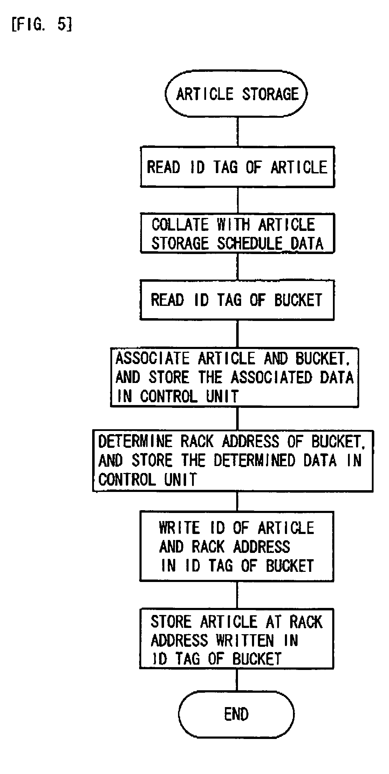

FIG. 5 shows the process at the time of storing an article in the automated warehouse. The conveyor reads an ID tag of the article, and transmits the read data to the control unit. The control unit collates the received data with storage schedule data, and inspects the article to be stored in the warehouse. At the station, the ID tag of the bucket is read by the ID reader. The control unit associates the ID of the article with the ID of the bucket, and stores the associated data. Further, the control unit determines the rack address for storing the bucket, and writes the rack address and the unique ID of the article in the ID tag of the bucket. Then, the bucket is transferred to the stacker crane. The rack address is read from the ID tag of the bucket by the ID reader provided at the hoisting frame, and the article is stored at the rack address. As a result, at the time of storing the article in the warehouse, the necessity of communication from the control unit to the stacker crane for transmitting the rack address is eliminated.

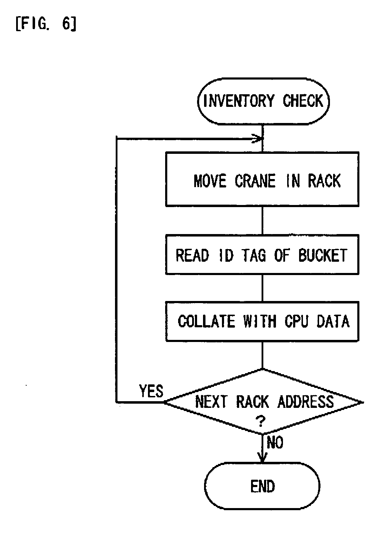

FIG. 6 shows an algorism of the inventory check process. The stacker crane moves inside the rack of the automated warehouse, and reads the ID tag of the bucket at each rack address to determine the list of unique IDs of articles. Then, the list is transmitted to the control unit, and collated with the data of the control unit. After the ID tag of the bucket is read at every rack address, the inventory check is finished. In this manner, the inventory check is performed easily.

In the embodiment, the bucket is used as the carrier. Alternatively, a pallet or a tray may be used as the carrier. Further, instead of providing two ID readers at the conveyor and the station, two ID readers may be provided only at the station. In the case where reading of the ID of the article, and reading and writing of the ID of the bucket can be carried out at the same position, one ID reader/writer may be provided at the station. Further, in the case where writing of data in the ID tag is not performed, only the ID reader may be provided. In the case where records of transportation and storage are written in the ID tag, the ID reader/writer may be provided.

In the embodiment, the following advantages can be obtained.
(1) It is not necessary for the control unit to notify the storage destination of the bucket to the stacker crane. Further, the rack address can be obtained from the ID tag of the bucket itself. Therefore, no confusion occurs in the order of the control. Even if the order of buckets is switched mistakenly, the article is not stored at the wrong rack address.
(2) Since the rack address of the bucket is not fixed, it is possible to change the storage position depending on the expected time of retrieving the article. Further, even if the bucket is transported to the outside of the automated warehouse, the racks do not become empty.
(3) In the case where the ID of the article or data of the article is written in the ID tag of the bucket, it is possible to carry out an inventory check easily. Further, it is possible to obtain information about the article from the bucket itself. For example, the bucket can be transported without the control of the control unit.

In the embodiment, the ID tags are attached to both of the article and the bucket, and the rack address for storing the bucket is not fixed.

## Claims

1. An automated warehouse (2) comprising:
- a control unit (20) for controlling the automated warehouse (2),
- at least one storage rack (4),
- a plurality of articles (22), wherein an ID tag (26) containing data including a unique ID of the article is attached to each article (22),
- a plurality of carriers (24) for receiving an article (22), wherein an ID tag (28) is attached to each carrier (24),
- at least one station (8),
- a conveyor (10) connected to the station (8) for conveying the articles (22) to this station (8),
- a stacker crane (6) for transporting a carrier (24) to the rack address of the carrier (24),
- a first ID reader (12) provided at the conveyor (10) or at the station (8) for reading data of the ID tag (26) of an article (22) to be stored/retrieved and transmitting the read data to the control unit (20),
- an ID reader/writer (14) provided at the station (8) for reading data of the ID tag (28) of a carrier (24), transmitting data to the control unit, receiving data from the control unit and writing data received from the control unit (20) in the ID tag (28) of the carrier (24), and
- a second ID reader (16) provided at an hoisting frame (7) of the stacker crane (6) for reading data of the ID tag (28) of a carrier (24), wherein the control unit (20) is programmed to associate the ID of the article (22) with the ID of the carrier (24) receiving the article (22), to store the data, to determine a rack address for the carrier (24) and to transmit the rack address and the ID of the article (22) to the ID reader/writer (14) for writing the rack address and the ID of the article (22) in the ID tag (28) of the carrier (24).

## Patentansprüche

1. Automatisiertes Lager (2), enthaltend:
- eine Steuereinheit (20) zur Steuerung des automatisierten Lagers (2),
- mindestens ein Lagerregal (4),
- eine Vielzahl von Gegenständen (22), wobei ein Kennzeichnungsetikett (26), welches eine eindeutige Kennzeichnung des Gegenstands enthaltende Daten enthält, an jedem Gegenstand (23) angebracht wird,
- eine Vielzahl von Trägern (24) zur Aufnahme eines Gegenstands (23), wobei an jedem Träger (24) ein Kennzeichnungsetikett (28) angebracht ist,
- mindestens eine Station (8),
- eine Fördereinrichtung (10), die mit der Station (8) verbunden ist, um die Gegenstände (22) zu dieser Station (8) zu befördern,
- ein Regalbediengerät (6) zum Transportieren eines Trägers (24) zu der Regaladresse des Trägers (24),
- eine erste Kennzeichnungsleseeinrichtung (12), die an der Fördereinrichtung (10) oder an der Station (8) vorgesehen ist, um die Daten des Kennzeichnungsetiketts (26) eines zu lagernden/zu entnehmenden Gegenstands zu lesen und die gelesenen Daten zu der Steuereinheit (20) zu übertragen,
- eine an der Station (8) vorgesehene Kennzeichnungs-Lese-/Schreibeinrichtung (14) zum Lesen der Daten des Kennzeichnungsetiketts (28) eines Trägers (24), Übertragen der Daten zu der Steuereinheit, Empfangen von Daten von der Steuereinheit und Schreiben der von der Steuereinheit (20) empfangenen Daten in das Kennzeichnungsetikett (28) des Trägers (24), und
- eine an einem Hubrahmen (7) des Regalbediengeräts (6) vorgesehene zweite Kennzeichnungs-Leseeinrichtung (16) zum Lesen der Daten des Kennzeichnungsetiketts (28) eines Trägers (24), wobei die Steuereinheit (20) so programmiert ist, dass sie die Kennzeichnung des Gegenstands (22) mit der Kennzeichnung des den Gegenstand (22) aufnehmenden Trägers (24) in Verbindung setzt, die Daten speichert, eine Regaladresse für den Träger (24) bestimmt und die Regaladresse und die Kennzeichnung des Gegenstands (22) zu der Kennzeichnungs-Lese-/Schreibeinrichtung (14) überträgt, um die Regaladresse und die Kennzeichnung des Gegenstands (22) in das Kennzeichnungsetikett (28) des Trägers (24) zu schreiben.

## Revendications

1. Entrepôt automatisé (2) comprenant :
- une unité de commande (20) pour commander l'entrepôt automatisé (2),
- au moins un râtelier de stockage (4),
- une pluralité d'articles (22), dans laquelle une étiquette d'identification (26) contenant des données, notamment un identifiant unique de l'article, est fixée à chaque article (22),
- une pluralité de supports (24) pour recevoir un article (22), dans laquelle une étiquette d'identification (28) est fixée à chaque support (24),
- au moins un poste (8),
- un transporteur (10) relié au poste (8) pour transporter les articles (22) à ce poste (8),
- une grue gerbeuse (6) pour transporter un support (24) à l'adresse du râtelier du support (24),
- un premier lecteur d'identifiant (12) disposé sur le transporteur (10) ou sur le poste (8) pour lire des données de l'étiquette d'identifiant (26) d'un article (22) à stocker/récupérer et pour transmettre les données lues à l'unité de commande (20),
- un dispositif de lecture/écriture d'identifiant (14) aménagé dans le poste (8) pour lire des données de l'étiquette d'identification (28) d'un support (24), transmettre des données à l'unité de commande, recevoir des données de l'unité de commande et écrire des données reçues de l'unité de commande (20) sur l'étiquette d'identification (28) du support (24), et
- un second lecteur d'identification (16) disposé dans un cadre de treuillage (7) de la grue gerbeuse (6) pour lire des données de l'étiquette d'identification (28) d'un support (24), dans lequel l'unité de commande (20) est programmée pour associer l'identifiant de l'article (22) à l'identifiant du support (24) recevant l'article (22), stocker les données, déterminer une adresse de râtelier pour le support (24) et transmettre l'adresse du râtelier et l'identifiant de l'article (22) au dispositif de lecture/écriture de l'identifiant (14) pour écrire l'adresse du râtelier et l'identifiant de l'article (22) sur l'étiquette d'identification (28) du support (24).
